# EUROPÄISCHE PATENTANMELDUNG

(11) **EP 0 956 895 A1**
(43) Veröffentlichungstag der Anmeldung: **17.11.1999**
(21) Anmeldenummer: 99108793.3
(22) Anmeldetag: 03.05.1999
(51) Int. Cl.: B01D 53/86, B01D 53/56, B01D 53/90, B01D 53/79, F23J 15/00

(54) **Vorrichtung zur Reduktion von Stickoxiden**

(30) Priorität: 11.05.1998 DE 19820990
(71) Anmelder: DEUTSCHE BABCOCK ANLAGEN GMBH, 46049 Oberhausen (DE)
(72) Erfinder: Dohmann, Joachim Dr., 46149 Oberhausen (DE); Kersken, Ulrich, 46145 Oberhausen (DE)
(74) Vertreter: Radünz, Ingo, Dipl.-Ing.

(57) **Zusammenfassung**

In einer Anlage zur Reduktion von Stickoxiden in einem Rauchgas aus einer Verbrennungsanlage ist ein das Rauchgas führender Rauchgaskanal (1) mit einem Reaktor verbunden. In diesem Rauchgaskanal (1) ist ein statischer Mischer (4) angeordnet, in dessen Wirkungsbereich eine mit einer Zerstäuberdüse (9) versehene Lanze (8) einmündet, die durch die Wand (6) des Rauchgaskanals (1) hindurchgeführt ist. Die Lanze (8) ist als Förderrohr (8) für ein zerstäubtes Reduktionsmittel ausgebildet, und die Zerstäuberdüse (9) ist im Bereich des Durchtrittes des Förderrohres (8) durch die Wand (6) des Rauchgaskanals (1) angeordnet.

## Beschreibung

Die Erfindung betrifft eine Vorrichtung in einer Anlage zur Reduktion von Stickoxiden mit den Merkmalen des Oberbegriffes des Patentanspruches 1.

Die bei der Verbrennung von Kohle oder anderen Brennstoffen, insbesondere Müll oder Holz entstehenden Rauchgase enthalten Stickoxide, die aus dem Rauchgas zu entfernen sind, um deren schädliche Einwirkungen auf Mensch und Umwelt zu vermeiden. Diese Stickoxide werden unter Verwendung eines Reduktionsmittels in einem Katalysator chemisch abgebaut.

Zu den bekannten Verfahren zum Abbau der Stickoxide zählt das SCR-Verfahren. In einer Variante dieses Verfahrens (Low-Dust-Schaltung) werden die zu reinigenden Rauchgase zunächst mittels eines Wärmetauschers auf eine erhöhte Temperatur gebracht. Durch eine externe Zufuhr von Wärme, die meist als Brenner fossiler Energieträger ausgeführt wird, wird die Temperatur der Rauchgase auf die Betriebstemperatur des Katalysators gebracht. Ein Reduktionsmittel wird mit dem Rauchgas vermischt, so daß am Eintritt in den Katalysator eine möglichst homogene Mischung der Rauchgasen und des Reduktionsmittels vorliegt. An den Oberflächen des Katalysators vollzieht sich die gewünschte heterogen-katalytische Abbaureaktion der Stickoxide. Die Rauchgase werden im weiteren Verlauf im Reingasteil des genannten Wärmetauschers abgekühlt.

Als Reduktionsmittel wird bei diesem Verfahren häufig ein flüssiges Reduktionsmittel verwendet, z.B. eine wäßrige Lösung von Ammoniak oder Harnstoff in Wasser. Bei einigen der bekannten Verfahren wird das flüssige Reduktionsmittel in einem externen Verdampfer in den gasförmigen Zustand gebracht und in diesem Zustand in den Rauchgasweg eingebracht. In den heutigen Anlagen wird das flüssige Reduktionsmittel mittels pneumatischer Zerstäuberdüsen zu feinen Tropfen zerstäubt. Die Zerstäuberdüse ist an dem austrittsseitigen Ende einer Zerstäuberlanze angeordnet und befindet sich in dem Wirkungsbereich eines statischen Mischers, der im Rauchgaskanal angeordnet ist. Das im Wirkungsbereich des statischen Mischers freigesetzte Spray verdampft aufgrund der hohen Temperaturen in diesem Bereich (z. B. 300°C) vollständig. Nachteilig an diesem Verfahren ist, daß die zerstäuberdüse innerhalb der heißen, rauchgasführenden Kanäle angeordnet ist. Die für diese Aufgaben verwendbare Zerstäuberdüsen besitzen sehr feine Bohrungen für die durchgesetzten Medien, weshalb gelegentlich eine Wartung vorgenommen werden muß. Weiterhin müssen die durch die Zerstäuberlanze hindurchgeführten Zuleitungen, insbesondere die Flüssigkeitszuleitung, vor einer übermäßigen Wärmeeinwirkung durch die heißen Rauchgase durch eine Isolierung geschützt. Die Wartung der Zerstäuberdüsen ist durch die tief in den Rauchgasweg eindringende Zuleitungslänge und die Isolierung der Zuleitungen innerhalb der Zerstäuberlanze aufwendig.

Bei einer anderen Variante des SCR-Verfahrens zur Reduktion von Stickoxiden (High-Dust-Schaltung) werden staub- und schwefeloxidhaltige, heiße Rauchgase mit dem Reduktionsmittel versetzt und anschließend dem Reaktor zur Reduktion der Stickoxide zugeführt. Hierbei sind die Zerstäuberdüsen für die Zerstäubung und das Einbringen des Reduktionsmittels einer extrem staubhaltigen und heißen Umgebung ausgesetzt.

Der Erfindung liegt die Aufgabe zugrunde, die gattungsgemäße Vorrichtung derart zu gestalten, daß die Wartung der Zerstäuberdüse vereinfacht werden kann.

Diese Aufgabe wird bei einer gattungsgemäßen Vorrichtung erfindungsgemäß durch die kennzeichnenden Merkmale des Patentanspruches 1 gelöst. Vorteilhafte Ausgestaltungen der Erfindung sind Gegenstand der Unteransprüche.

Die Erfindung sowie deren Wirkungsweise und Vorteile werden an Ausführungsbeispielen und der Zeichnung im folgenden näher erläutert. Es zeigen:

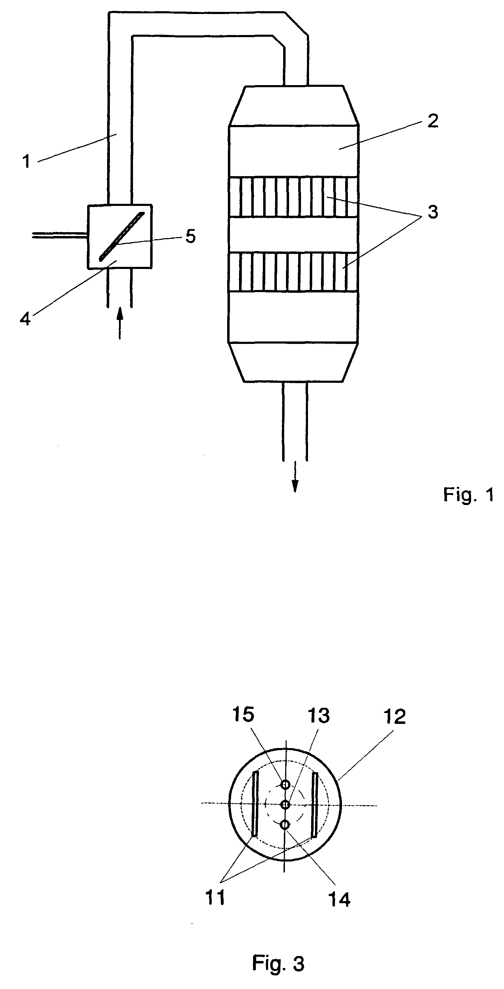

Fig. 1 eine Anlage zur Reduktion von Stickoxiden.
Fig. 2 den statischen Mischer einer Anlage nach Fig. 1 und
Fig. 3 die Seitenansicht nach Fig. 2 in Blickrichtung A

Rauchgas, das aus einer Verbrennungsanlage zur Verbrennung von Brennstoffen oder Müll stammt, strömt in Pfeilrichtung durch einen Rauchgaskanal 1, der zu einem Reaktor 2 geführt ist. Dieser Reaktor 2 enthält in mehreren Ebenen Katalysatorsteine 3, an denen ein dem Rauchgas zugeführtes Reduktionsmittel und das in dem Rauchgas vorhandene, bei der Verbrennung entstandene Stickoxid miteinander reagieren. Das Rauchgas kann zuvor gereinigt und in einem vorgeschalteten Wärmetauscher auf die für die Reaktion in dem Reaktor 2 notwendige Temperatur erwärmt worden sein. Der Rauchgaskanal 1 kann auch ein heißes, staubhaltiges Rauchgas dem Reaktor 2 zuführen.

Vor dem Eintritt in den Reaktor 2 ist in dem Rauchgaskanal 1 ein statischer Mischer 4 angeordnet. Dieser Mischer 4 enthält ein flächenförmiges Einbau- oder Mischelement 5, das unter einem Winkel zur Strömung des Rauchgases angeordnet ist. Das Einbauelement 5 ist in der Zeichnung der Einfachheit halber als ebene Platte dargestellt. Das Einbauelement 5 kann aber vorzugsweise die Form eines Trapezes aufweisen, das mit der kurzen Trapezseite der Strömungsrichtung des Rauchgases entgegen gerichtet ist. Dieses trapezförmige Einbauelement 5 ist entlang von drei geraden Linien derart abgekantet, daß das Einbauelement 5 im Querschnitt die Form eines ω (Omega) oder eines W aufweist. Dabei sind zur Anströmung des Rauchgases hin beidseitig einer konkaven Wölbung zwei konvexe Wölbungen gebildet. Diese besondere Form des Einbauelementes 5 ist Gegenstand einer gleichzeitig eingereichten Patentanmeldung.

Die Vorderkanten des in dem Rauchgasstrom liegenden Einbauelementes 5 werden von dem Rauchgas allseitig umspült. Dadurch entstehen an den Kanten Ablösewirbel, sie sich stromabwärts kegelförmig ausbreiten und ein Wirbelfeld bilden, das durch seine Rotation Strömungskomponenten quer zur Hauptströmungsrichtung erzeugt. Diese Querströmungskomponenten führen durch den mit ihnen verbundenen Impulsaustausch quer zur Strömungsrichtung zu einer guten Durchmischung des Rauchgasstromes.

Durch die Wand 6 des Rauchgaskanals 1 ist eine mit einer Austrittsöffnung 7 versehene Lanze 8 so hindurchgeführt, daß sich die Austrittsöffnung 7 im Wirkungsbereich des Einbauelementes 5 in einem Strömungsbereich mit reduziertem Druck befindet. Diese Lanze 8 dient dazu, ein Reduktionsmittel in das Rauchgas einzubringen. Als Reduktionsmittel wird Ammoniak oder Harnstoff in einer wäßrigen Lösung verwendet, die durch eine als Pneumatikdüse ausgebildete Zerstäuberdüse 9 mit Hilfe von Luft oder Dampf als Zerstäubermedium in das Rauchgas eingeblasen wird.

Die Zerstäuberdüse 9 ist im Bereich des Durchtrittes der Lanze 8 durch die Wand 6 der Rauchgaskanals 1 angeordnet. Die Lanze 8 wird damit zu einem Förderrohr 8, durch das das in der Zerstäuberdüse 9 zerstäubte Reduktionsmittel als Spray in das Innere des Rauchgaskanals 1 geleitet wird. Die sich dabei einstellende Strömungsgeschwindigkeit hängt in erster Näherung von der zur Zerstäubung eingesetzten Luftmenge ab. Kurze Aufenthaltszeiten des Sprays in der Förderleitung sind vorteilhaft, um eine Vergrößerung der durch Zerstäubung erzeugten Tropfen infolge einer Tropfenkoaleszenz zu vermeiden.

Das aus der Wand 6 des Rauchgaskanals 1 herausragende Ende des Förderrohres 8 ist mit einem Flansch 10 versehen, auf dem entfernbar ein mit Handgriffen 11 versehener Deckel 12 aufgeschraubt ist. Der Deckel 12 dichtet das Förderrohr 8 gegen die umgebende Außenatmosphäre ab.

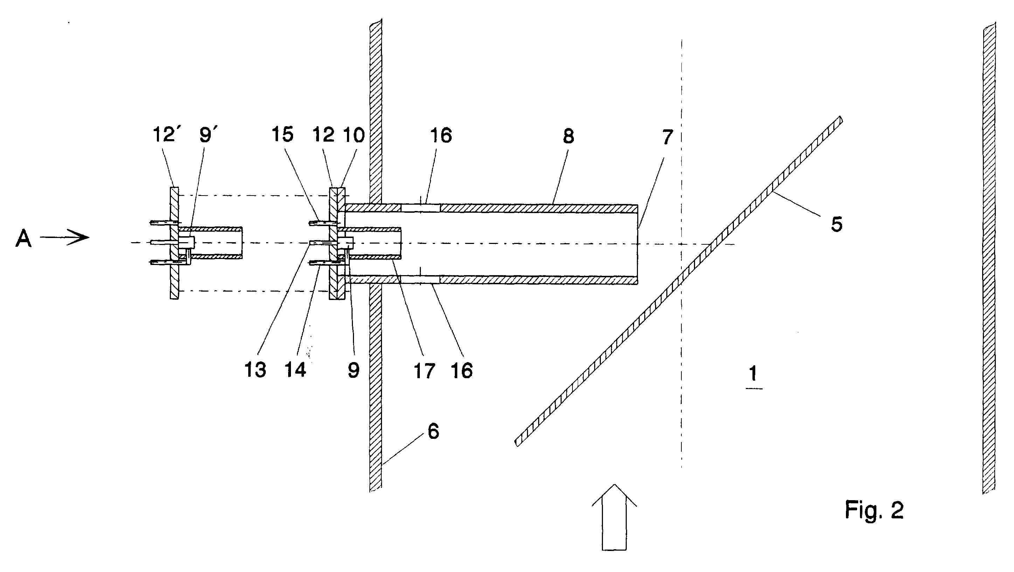

In dem Deckel 12 ist die Zerstäuberdüse 9 untergebracht, die damit zusammen mit dem Deckel 12 von dem Förderrohr 8 abgenommen werden kann. Auf der linken Seite der Fig. 2 ist der von dem Förderrohr 8 abgenommene Deckel 12' mit der daran befestigten Zerstäuberdüse 9' zu erkennen

Die Zerstäuberdüse 9, die in der Zeichnung nur schematisch dargestellt ist, ist mit einer Zuleitung 13 für das Reduktionsmittel und mit einer Zuleitung 14 für die als Zerstäubermedium dienende Luftoder den Dampf versehen. Eine weitere Zuleitung 15 für Luft mündet direkt in das Förderrohr 8.

Im vorderen, außerhalb des Wirkungsbereiches des Einbauelementes 5 liegenden Abschnitt kann die Wandung der Förderleitung an einer oder mehreren Stellen mit Durchbrechungen 16 versehen oder als poröse Wand ausgeführt sein. In diesem Abschnitt der Förderleitung ist der Staudruck der Rauchgase höher als am hinteren Bereich der Förderleitung, wodurch es zu einer Durchströmung der Förderleitung mit heißen Rauchgasen kommt. Die Rauchgase können sich dadurch bereits innerhalb der Förderleitung mit dem von der Zerstäuberdüse 9 erzeugten Spray vermischen. Die zusätzliche Durchströmung der Förderleitung mit Rauchgasen erhöht die Strömungsgeschwindigkeit des Sprays und vermindert damit die Koaleszenz von Tropfen. Zum anderen werden bei dieser Anordnung heiße Rauchgase durchgesetzt, weshalb eine Verdampfung der Tropfen des wäßrigen Reduktionsmittels einsetzt. Damit ist eine weitere Geschwindigkeitserhöhung in der Förderleitung verbunden. Schließlich findet eine Erwärmung der Förderluft durch die Wandung der Förderleitung statt, woraus eine weitere Geschwindigkeitserhöhung resultiert.

Zum Schutz der Zerstäuberdüse 9 vor der Einwirkung heißer Rauchgase kann innerhalb der Förderleitung in dessen Anfangsbereich ein Schutzrohr 17 angebracht sein, das die Zerstäuberdüse 9 in einem radialen Abstand umgibt. Die Achse des Schutzrohres verläuft parallel zur Achse der Förderleitung. Dadurch kann das erzeugte Spray des Reduktionsmittels innerhalb des Schutzrohres strömen, und Rauchgase können gegebenenfalls in dem Zwischenraum zwischen dem Schutzrohr 17 und der Förderleitung strömen. Spray und Rauchgase vermischen sich bei Erreichen des Endes des Schutzrohres, spätestens aber bei Erreichen der Austrittsöffnung 7 am hinteren Ende der Förderleitung.

Die Förderleitung ragt vorzugsweise horizontal, oder mit einer geringen Neigung nach unten in den Rauchgasweg. Bei der Behandlung von Rauchgasen mit großen Staubgehalten sollte die Neigung vergrößert werden. In diesem Fall kann eine zusätzliche Verwendung von Schleierluft sinnvoll sein. Damit kann die erfindungsgemäße Anordnung im Bereich der High-Dust-SCR-DeNOₓ-Technik z. B. für Kraftwerke verwendet werden.

Die Anordnung der Zerstäuberdüse 9 am vorderen Ende des Förderrohres 8 bringt gegenüber einer Zerstäuberlanze mit einer Anordnung der Zerstäuberdüse 9 am hinteren Ende folgende Vorteile:
■ Die für eine Düsenwartung erforderliche Zeit wird verkürzt, da die Zerstäuberdüse 9 an einer leicht zugänglichen Stelle in der Nähe der Wand 6 des Rauchgaskanals 1 angeordnet ist.
■ Zum Ausbau der Zerstäuberdüse 9 ist nur eine Person erforderlich, da keine Zerstäuberlanze Verwendung findet, sondern die Zerstäuberdüse 9 in dem entfernbaren Deckel 12 untergebracht ist und zusammen mit diesem zu Wartungszwecken entfernt werden kann.
■ Die Betriebstemperatur der Zerstäuberdüse 9 entspricht etwa der Umgebungstemperatur und ist damit wesentlich geringer als bei der bekannten Zerstäuberlanze. Aus diesem Grund ist auszuschließen, daß bereits in der Zerstäuberdüse 9 die Verdampfung des Reduktionsmittels auftritt. Aus diesem Grund kann ein Reduktionsmittel verwendet werden, an das geringere Anforderungen in Bezug auf die Reinheit (Salzgehalt) als bisher gestellt werden müssen.
■ Die flüssigkeitsführende Zuleitung ist auf geringerem Temperaturniveau als bei der bekannten Zerstäuberlanze. Dadurch kommt es innerhalb der Leitungen nicht mehr zu Siedevorgängen, und es wird ein stabiler, pulsationsfreier Betrieb der Zerstäuberdüsen möglich, was zu einer Vergleichmäßigung der Größenverteilung der erzeugten Tropfen führt. Dadurch sinkt der mittlere Durchmesser der erzeugten Tropfen, da Betriebsphasen vermieden werden, in denen große Tropfen gebildet werden.
■ Die Zerstäuberdüse 9 kann im laufenden Betrieb des nachgeschalteten Reaktors 2 zur Reduktion der Stickoxide gewartet werden.
■ Im Falle von Staubablagerungen innerhalb des Förderrohres 8 können diese im laufenden Betrieb mittels eines Kalibers gereinigt werden. Funktionsstörungen sind daher nicht zu erwarten.
■ Die bekannten Zerstäuberlanzen für Kraftwerke nehmen aufgrund der Kanalabmessungen große Maße und Gewichte an. Bei der Wartung von Zerstäuberdüsen sind aufgrund des hohen Gewichtes der Zerstäuberlanzen stets Hebezeuge z. B. ein dauerhaft installiertes Hebezeug erforderlich. Diese großen Hebezeuge sind erforderlich, da die Einbauhöhe z. B. 30 m betragen kann. Bei Einsatz der erfindungsgemäßen Vorrichtung entfällt die Notwendigkeit eines Hebezeuges.
■ Bei der Verwendung in High-Dust-SCR-DeNOₓ-Anlagen besteht ein erhöhtes Risiko der Verschmutzung von Zerstäuberdüsen, da diese in einer extrem staubhaltigen und heißen Umgebung arbeiten. Aus diesem Grund werden derartige Zerstäuberdüsen mit Schleierluft umspült. Erfindungsgemäß arbeiten die Zerstäuberdüsen in einer Umgebung mit niedrigeren Temperaturen und in einer staubarmen Umgebung, weshalb die Gefahr einer Verschmutzung durch direkte Einwirkung der Rauchgase oder der Stäube auf die Zerstäuberdüse 9 vermindert ist. Es ist zu erwarten, daß die Wartungsintervalle signifikant vergrößert werden.

## Patentansprüche

1. Vorrichtung in einer Anlage zur Reduktion von Stickoxiden in einem Rauchgas aus einer Verbrennungsanlage, wobei ein das Rauchgas führender Rauchgaskanal (1) mit einem Reaktor (2) verbunden und in dem Rauchgaskanal (1) ein statischer Mischer (4) angeordnet ist, in dessen Wirkungsbereich eine mit einer Zerstäuberdüse (9) versehene Lanze (8) einmündet, die durch die Wand (6) des Rauchgaskanals (1) hindurchgeführt ist, dadurch gekennzeichnet, daß die Lanze (8) als Förderrohr (8) für ein zerstäubtes Reduktionsmittel ausgebildet ist und daß die Zerstäuberdüse (9) im Bereich des Durchtrittes des Förderrohres (8) durch die Wand (6) des Rauchgaskanals (1) angeordnet ist.

2. Vorrichtung nach Anspruch 1, dadurch gekennzeichnet, daß das aus der Wand (6) des Rauchgaskanals (1) herausragende Ende des Förderrohres (8) durch einen entfernbaren Deckel (12) verschlossen ist, in den die Zerstäuberdüse (9) eingesetzt ist.

3. Vorrichtung nach Anspruch 1 oder 2, dadurch gekennzeichnet, daß das Förderrohr (8) stromabwärts von der Zerstäuberdüse (9) innerhalb des Rauchgaskanals (1) und außerhalb des Wirkungsbereiches des statischen Mischers (4) mit einer oder mehreren Durchbrechungen (16) versehen ist.

4. Vorrichtung nach einem der Ansprüche 1 bis 3, dadurch gekennzeichnet, daß die Zerstäuberdüse (9) in einem radialen Abstand von einem Schutzrohr (17) umgeben ist, das im Anfangsbereich des Förderrohres (8) und konzentrisch zu diesem angeordnet ist.
